# EUROPEAN PATENT APPLICATION

(11) **EP 1 106 810 A1**
(43) Date of publication of application: **13.06.2001**
(21) Application number: 00935599.1
(22) Date of filing: 09.06.2000
(51) Int. Cl.: F02F 1/24, F02F 1/42, F01L 1/12, B62K 11/00, B62M 7/02

(54) **SMALL MOTORCYCLE WITH ENGINE**

(30) Priority: 11.06.1999 JP 16595399; 02.06.2000 JP 2000165705
(71) Applicant: YAMAHA HATSUDOKI KABUSHIKI KAISHA, Iwata-shi, Shizuoka 438-8501 (JP)
(72) Inventor: SHIMMURA, Syuzaburo, Yamaha Hatsudoki K.K., Iwata-shi, Shizuoka 438-8501 (JP); SATO, Toshiyuki, Yamaha Hatsudoki K.K., Iwata-shi, Shizuoka 438-8501 (JP); NAGASE, Takeshi, Yamaha Hatsudoki K.K., Iwata-shi, Shizuoka 438-8501 (JP)
(74) Representative: Grünecker, Kinkeldey, Stockmair & Schwanhäusser Anwaltssozietät
(86) International application number: JP0003745
(87) International publication number: WO0077378

(57) **Abstract**

To provide a two-wheeled small vehicle on which is mounted an OHV engine having smaller and compact size, compared to conventional OHV engines of small size.

In a two-wheeled small vehicle with an engine, having a head pipe retaining a steering shaft and having a vehicle body frame 7 joined thereto, the engine having intake and exhaust valves which are operated to be open or close by actuating a push rod 55 for intake process and a push rod 56 for exhaust process, and said engine being disposed along the lower part of the vehicle body frame, the direction of the crankshaft 37 of the engine 15 is in the same direction as the longitudinal direction of the vehicle, and a single camshaft 52 for both intake and exhaust processes is disposed parallel and above the crankshaft 37.

## Description

### Field of the Invention

This invention relates to a small bicycle with an engine such as a power-assisted bicycle, and particularly to a small bicycle with an OHV type four-stroke engine.

### Background of the Invention

Various types of power-assisted bicycles have been put to practical use in which auxiliary power such as engine power or motor power, together with a pedaling force, is combined to drive the driving system.

As a power source for small light-weight vehicles such as power-assisted bicycles describe above, it is desirable for the motor or the engine to have a structure as compact as possible and to be mounted on the vehicle body with compact arrangement.

Two-stroke engines have been used for such engines for small bicycles such as power-assisted bicycles, but use of four-stroke engines is contemplated from the viewpoint of fuel consumption, controllability and exhaust emissions.

The valve drive system of the four-stroke engine is classified into two types, one of which is an OHV type in which intake and exhaust valves in the cylinder head are opened and closed by rocker arms adapted to push the top ends of the valve stems through push rods by using cams on cam shafts disposed parallel to and at the sides of the crank shaft, and the other of which is an OHC type in which cam shafts as well as intake and exhaust valves are provided in the cylinder head, the valves being opened and closed by rocker arms adapted to push the top ends of the valve stems directly without using push rods.

The following four types are considered in mounting such a four-stroke engine onto a small bicycle.
1. Horizontal OHV engine (crank shaft is oriented laterally of the vehicle)
2. Horizontal OHC engine (crank shaft is oriented laterally of the vehicle)
3. Vertical OHV engine (crank shaft is oriented longitudinally of the vehicle)
4. Vertical OHC engine (crank shaft is oriented longitudinally of the vehicle)

Since in the OHC engines of types 2, 4, a valve drive system including cam shafts and intake and exhaust valves is disposed in the cylinder head, the engine becomes larger in height and inappropriate for size reduction. In this case, the vertical type engine could be made slimmer in the lateral direction, but the engine itself is large in height, and thus the OHC engine itself is inappropriate for size reduction.

On the other hand, in the OHV engines of types 1, 3, camshafts are disposed at the sides of the crankshafts, and thus advantageous to size reduction in terms of engine height.

Comparing the horizontal engines of types 1, 2 and the vertical engines of types 3, 4, since in the horizontal engine of types 1, 2, the crankshaft is oriented laterally of the vehicle body, the engine width becomes large for either of the OHV and OHC types. Also, since in the vertical engines of types 3, 4, the cam shafts are arranged at the sides of the crankshaft, the engine is larger in width.

In a vehicle carrying a conventional OHV engine, since the engine has a relatively large displacement and the size of the vehicle body itself is also large, there is a room in the lateral direction and no problem arises if a crank shaft is provided laterally and cam shafts are disposed parallel to the crank shaft side by side.

However, if an OHV engine is mounted to a small bicycle such as a power-assisted bicycle for size reduction, the engine mounting section becomes so large with respect to the size of the vehicle body due to scanty room in the lateral direction that no compact arrangement can be effected. Since especially in the power-assisted bicycle, pedals are disposed rearwardly of and below the engine, it is necessary that the engine is disposed in a high position and its height is made as compact as possible. However, in the conventional OHV engine, an adequate compact arrangement is impossible in the vertical direction.

In view of the foregoing, it is an object of this invention to provide a small bicycle carrying an engine with a structure in which an OHV engine advantageous to size reduction is made even smaller and compactor.

### Disclosure of the Invention

In order to achieve the foregoing object, this invention is characterized by a small bicycle with an engine comprising a head pipe for holding a steering shaft and a body frame connected to said head pipe, and an engine disposed along the underside of said body frame, said engine having an intake valve and an exhaust valve adapted to be opened and closed through an intake push rod and an exhaust push rod driven by a cam, respectively, wherein a crank shaft of said engine is oriented longitudinally of the vehicle, and a single intake and exhaust cam shaft is provided parallel to and upwardly of said crank shaft.

According to an arrangement described above, as a result of an OHV engine with a valve drive system using push rods, the height of the engine itself can be made smaller so as to be advantageous especially to a small bicycle, and as a result of a crank shaft being disposed longitudinally of the vehicle, a compact structure can be effected especially in the lateral direction. Therefore, when an engine or a power assisting mechanism is disposed approximately centrally of the vehicle body, pedals or foot rests can be disposed without protruding significantly in the lateral direction, providing comfortable foot resting and pedaling with an improved drive feeling.

A preferred arrangement is characterized in that axes of an intake passage and an exhaust passage in communication with said intake and exhaust valves, respectively, are oriented longitudinally of the vehicle.

According to this arrangement, the intake pipe or the exhaust pipe doesn't protrude from the right and left sides of the vehicle body, providing a compactor structure in the lateral direction.

Another preferred arrangement is characterized in that said intake passage passes through the space between said intake and exhaust push rods.

According to this arrangement, the intake passage is disposed between the intake and exhaust push rods, so that a space within the cylinder head is utilized effectively, providing an even compactor structure in the lateral direction.

Still another preferred arrangement is characterize in that said body frame consists of a pair of right and left main frames, valve seats of said intake and exhaust valves of the engine are dislocated longitudinally of the vehicle body, and a head cover for enclosing the top ends of said push rods is disposed between said right and left main frames.

According to this arrangement, since the intake and exhaust valves are dislocated longitudinally of the vehicle body, intake and exhaust rocker arms located at the top ends of the push rods are disposed close to each other laterally, so that the head cover of the cylinder head can be formed narrower in the lateral direction. As a result, a body frame extending from the head pipe to the upper middle portion of the vehicle body is composed, for example, of a pair of right and left pipe frames and the head cover can be disposed between the two pipe frames, so that due to size reduction in the lateral direction and effective utilization of the vertical space, the engine can be disposed centrally of the vehicle body at a high position with enough space for foot rests and pedals placed thereunder.

### Brief Description of the Drawings

Fig. 1 is a structural view of a power-assisted bicycle embodying this invention;
Fig. 2 shows a plan view and a vertical sectional view of an engine of the power-assisted bicycle of Fig. 1;
Fig. 3 is a rear view of the engine of Fig. 2;
Fig. 4 shows a plan view and a side view of the valve drive system of the engine of Fig. 2;
Fig. 5 is a front view of the valve drive system of Fig. 4;
Fig. 6 is a structural illustration of another embodiment of this invention;
Fig. 7 is a side view of an engine of Fig. 6; and
Fig. 8 is a front view of the engine of Fig. 7.

### Best Mode to Implement the Invention

Now, an embodiment of this invention will be described below with reference to the drawings.

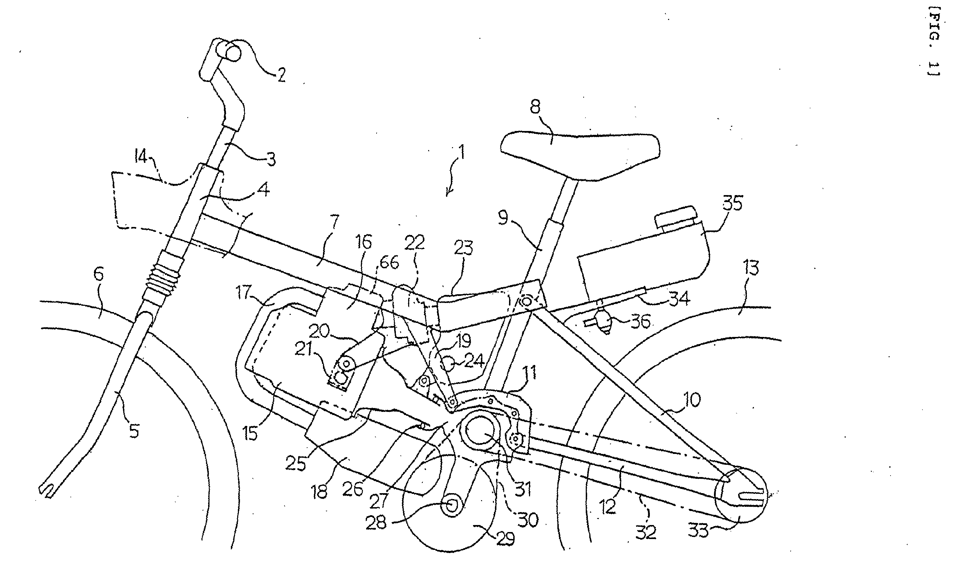

Fig. 1 is a structural view of a power-assisted bicycle embodying this invention.

The power-assisted bicycle 1 has a head pipe 4 in which is inserted and held for rotation a steering shaft 3 of a handle 2. A front fork 5 connected to the steering shaft 3 inserted in the head pipe 4 is provided on a front wheel for steering movement in a straddling fashion.

To the head pipe 4 is fixed main frames 7 constituting a body frame and made, for example, of a pair of right and left pipes, through a bracket (not shown) by an appropriate method such as welding. The rear ends of the main frames 7 are connected fixedly to a seat post 9 for holding a saddle 8 through a cross pipe (not shown). To the rear ends of the main frames 7 are fixed a rear frame 10.

The lower end of the seat post 9 is fixed, for example by welding, to a frame-like support bracket 11 connecting the upper side of a force combining mechanism 27 mounted centrally of the vehicle body. To the support bracket 11 are fixed the force combining mechanism 27 and a chain stay 12. The chain stay 12, together with a rear frame 10, supports, at the rear end, a rear wheel 13 for rotation. The support bracket 11 is connected through a stay 19 to approximately a central portion of the main frames 7 for higher rigidity of the body frame. The main frames 7 are covered by a body cover 14 made, for example, of plastic material, together with a headlight (not shown) mounted on the head pipe 4.

Approximately centrally of the main frames 7 and to the underside thereof is fixed an engine bracket 20, to which is mounted an engine 15 through engine mounts 21. An exhaust pipe 16 extending forwardly from a cylinder head of the engine 15 is bent around the front of the engine rearwardly thereunder and connected to a muffler 18. The engine 15, as described later, has a crank shaft disposed longitudinally of the vehicle, to which is coupled, in the rear of the engine 15, a transmission 25 constituted by a transmission drive system such as a drive shaft (not shown).

The rear end of the transmission 25 is connected to the force combining mechanism 27 through a vibration absorbing rubber damper 26. The force combining mechanism 27 combines, on a force combining shaft 31, an engine drive force from the transmission 25 and a pedaling force from pedals (not shown) connected to a pedal crank shaft 28. The pedaling force is transmitted to a force combining shaft 31 through a chain 30 stretched over a sprocket 29 on the pedal crankshaft 28. Drive force from the force combining shaft 31 is transmitted to a sprocket 33 on the hub of the rear wheel 13 through a chain 32 to drive the rear wheel 13.

A head cover 66 on the cylinder head 16 of the engine 15 is disposed between the right and left main frames 7, as described later. Rearwardly of the cylinder head 16 is connected a carburetor 22, rearwardly of which is connected an air cleaner 23. Numeral 24 designates an air intake of the air cleaner.

To the rear frame 10 near its upper end is fixed a support frame 34, to which is fastened a fuel tank 35. On the forward underside of the fuel tank 35 is provided a fuel cock 36, through which fuel is supplied to a carburetor 22 via an unillustrated fuel pipe.

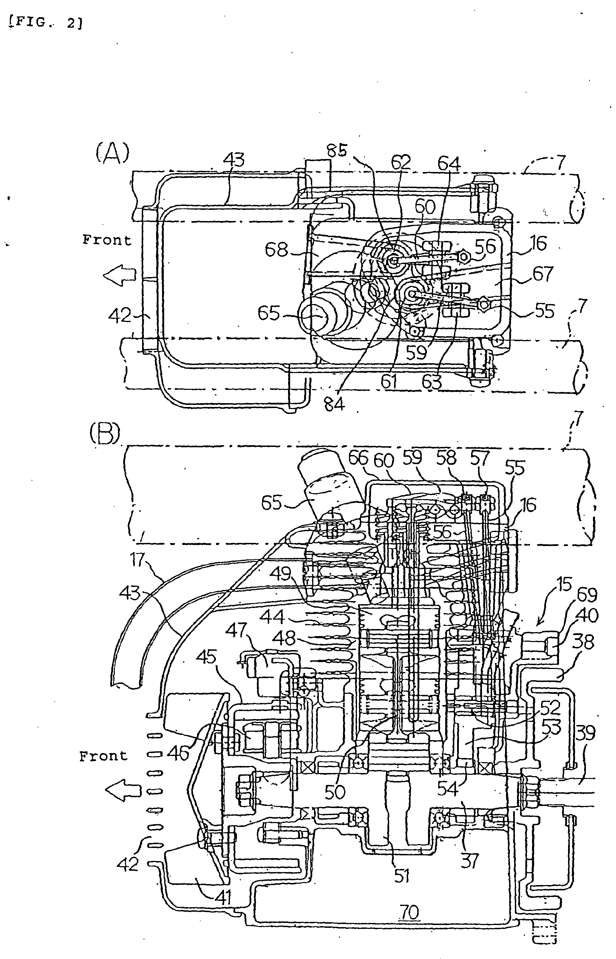

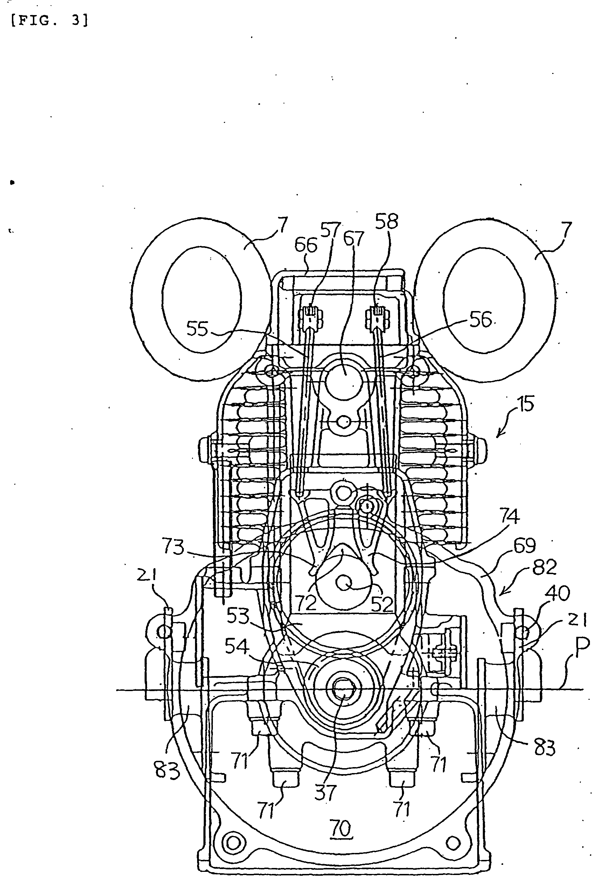

Figs. 2(A) and 2(B) are a plan view and a vertical sectional view of the engine, respectively, and Fig. 3 a rear views corresponding to Fig. 2.

The engine 15 is a four-stroke two-valve single cylinder engine with an OHV type valve drive system, having a crankshaft 37 disposed in the longitudinal direction of the vehicle. To the rear end of the crankshaft 37 is connected a drive shaft 39 of a transmission 25 (Fig. 1) through a clutch 38. To a mating surface 69 of the clutch 38 is attached the transmission, with bolts (not shown) passing through bolt holes 40.

A crankcase 82 enclosing the crankshaft 37 is divided, at a mating plane P (Fig. 3), into two parts, the upper and lower ones coupled together, with a plurality of bolts 71. The crankcase is formed at the bottom with an oil pan 70, and oil is circulated in the engine through an oil strainer or an oil pump (not shown). The engine 15 is supported, at right and left sides of the crank case 82, on engine mounts 21 provided at one ends of an engine bracket 20 (Fig. 1) through rubber members 83, in suspended relation.

To the forward end of the crank shaft 37 is attached a cooling fan 41, by which outside air is introduced from an air intake 42 into an air shroud 43 to cool a cylinder block 48 formed with radiation fins 44, to be discharged from the rear of the engine. To the crankshaft 37 in the rear of the fan 41 is fixed a flywheel magnet 45, which constitutes a generator, together with a charging coil 46 inside. Radially outwardly of the flywheel magnet 45 is provided a pulser coil 47 for producing ignition pulse signals.

Within the cylinder block is disposed a piston 49. The piston 49 is connected to the crankshaft 37 in a position opposite webs 51 through a connecting rod 50. At the rear side of the cylinder block 48 and upwardly of the crankshaft 37 is disposed a cam shaft 52 parallel with the crankshaft 37. On the camshaft 52 is provided a cam gear 53, which engages with a cam drive gear 54 of the crankshaft 37. The camshaft 52 is a single camshaft common to intake and exhaust valves.

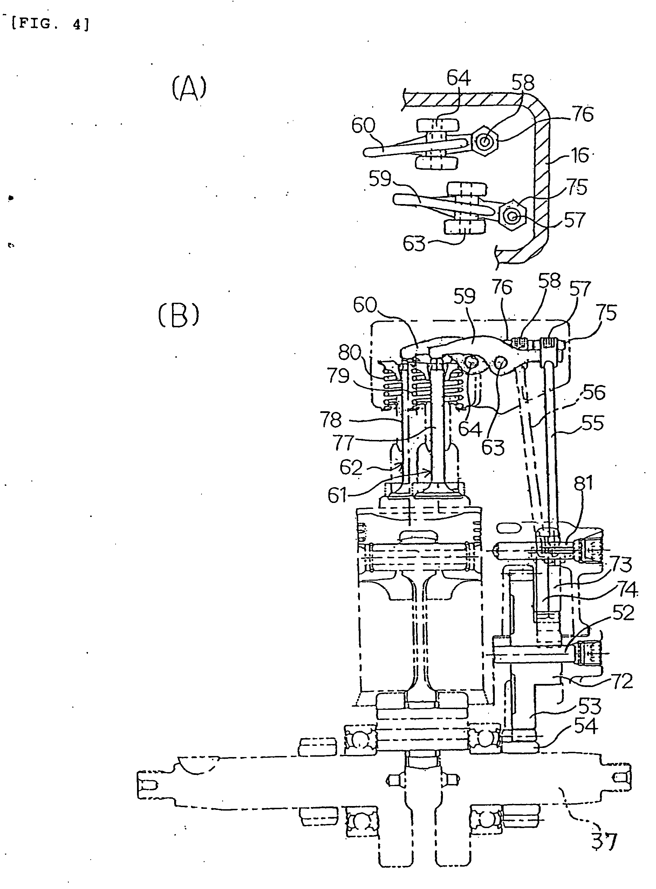

The camshaft 52 is formed with a cam 72 (Fig. 3). An intake push rod 55 and an exhaust push rod 56 are provided through cam followers 73,74 in sliding contact with the cam 72, respectively. The top ends of the intake and exhaust push rods 55, 56 are connected to one ends of intake and exhaust rocker arms 59, 60 through adjusting screws 57, 58. The other ends of the rocker arms 59, 60 are engaged with the intake valve 61 and the exhaust valve 62, respectively (see Fig. 4).

Valve seats 84, 85 of the intake and exhaust valves 61, 62 in the cylinder head 16 are dislocated to each other in the longitudinal direction of the vehicle, and the line passing through the centers of the valve seats 84. 85 is not at right angles, but slanting to the longitudinal direction. Therefore, the distance between the intake and exhaust valves 61, 62 in the lateral direction can be made smaller, as well as the width of the cylinder head 16, and an intake port 67 is allowed to pass through the space between the push rods 55, 56, as described later. On the top of the cylinder head and adjacent to the intake and exhaust valves 61, 62 is mounted an ignition plug 65. The valve seat of the intake valve 61 is in communication with an intake port 67. The intake port 67 is connected to a carburetor 22 (Fig. 1). The valve seat of the exhaust valve 22 is in communication with an exhaust port 68. The exhaust port 68 is connected to an exhaust pipe 17 (Fig. 1).

In this embodiment, the intake port 67 and the exhaust port 68 are disposed with their axes approximately in the longitudinal direction of the vehicle. In this case, the intake port 67 is disposed so as to pass through the space between the intake push rod 56 and the exhaust push rod 56. The top of the cylinder head is covered by a head cover 66. The engine 15 is disposed such that the head cover 66 is placed between the right and left main frames 7. The head cover 66 is disposed between the main frames 7, so that the vertical space of the vehicle body can be utilized efficiently.

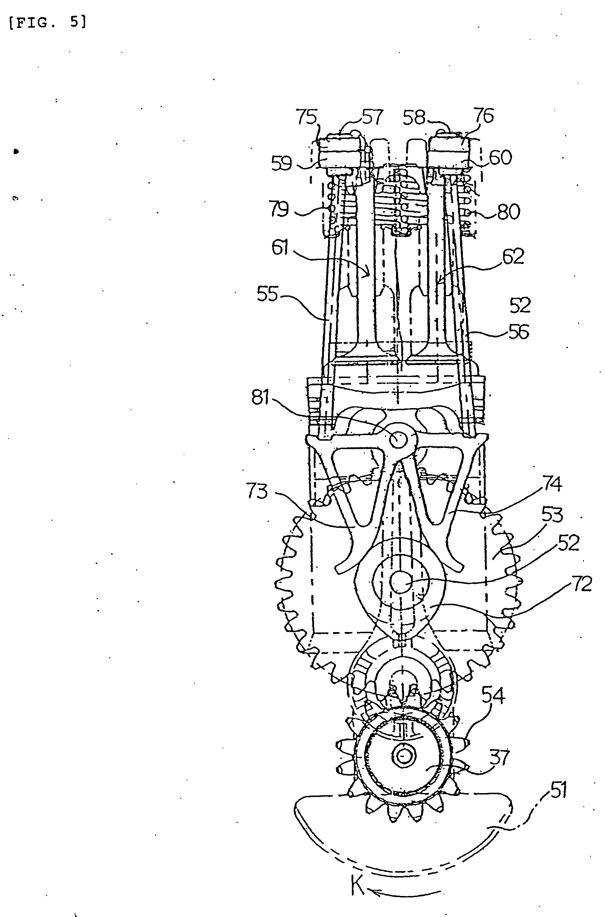

Figs. 4 (A) and 4 (B) are a plan view and a side view of the valve drive system of the engine, respectively, and Fig. 5 a front view corresponding to Fig. 4.

As shown in the figure, a cam drive gear 54 fitted on the crank shaft 37 is meshed with a cam sprocket 53 fitted on the cam shaft 52, and the cam 72 formed integral with the cam sprocket 53 is rotated in synchronization with the crank shaft 37. The crankshaft 37, together with its webs 51, is rotated in the direction of the arrow K to rotate the cam 72. The intake and exhaust cam followers 73, 74 fitted on a axis 81 is brought into sliding contact with the cam 72 to move the push rods 55, 56 vertically according to the profile of the cam, respectively. The top ends of the push rods 55, 56 are connected adjustably to one ends of rocker arms 59, 60 through adjusting screws 57, 58.

The adjusting screws 57, 58 are fitted with locking nuts 75, 76 for securing the adjusted position of the rocker arms 59, 60. The other ends of the rocker arms 59, 60 are engaged with the top ends of valve stems 77, 78 of the intake and exhaust valves 61, 62. These rocker arms 59, 60 are supported for rocking movement on shafts 63, 64 fixed to the cylinder head. The intake valve 61 and the exhaust valve 62 are biased in the direction of valve closing (upward) by valve springs 79, 80. Rocker arms 59, 60 are adapted to push down the intake and exhaust valves 61, 62 against the valve springs 79, 80 for valve opening.

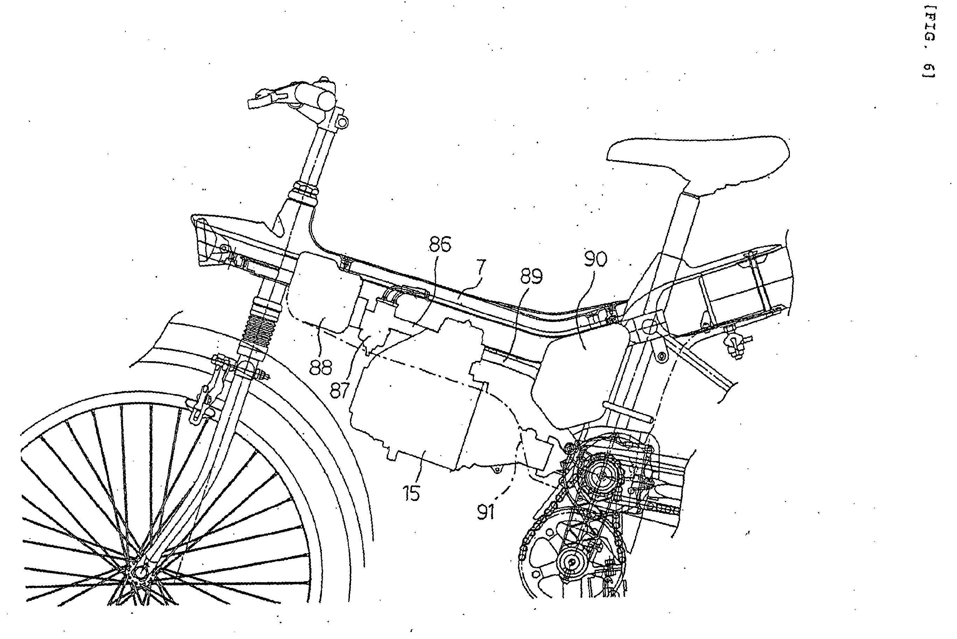

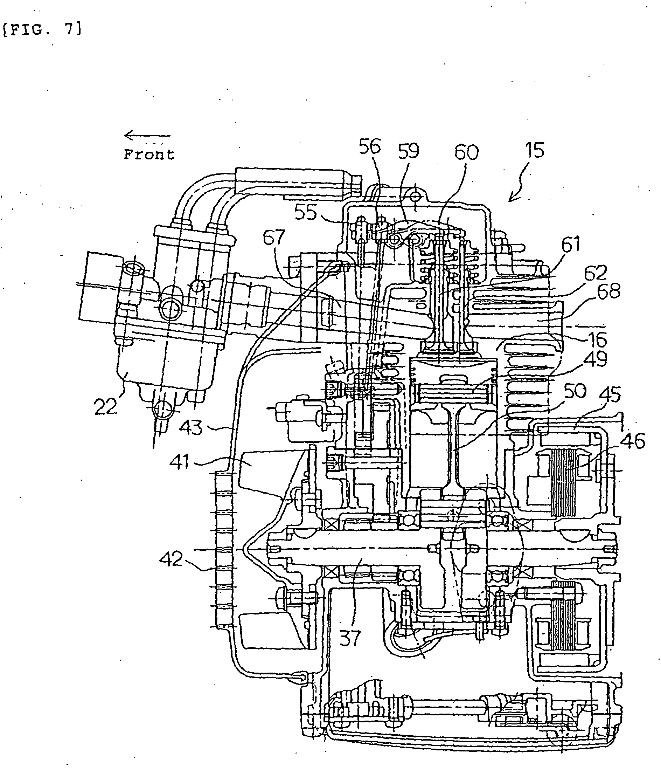

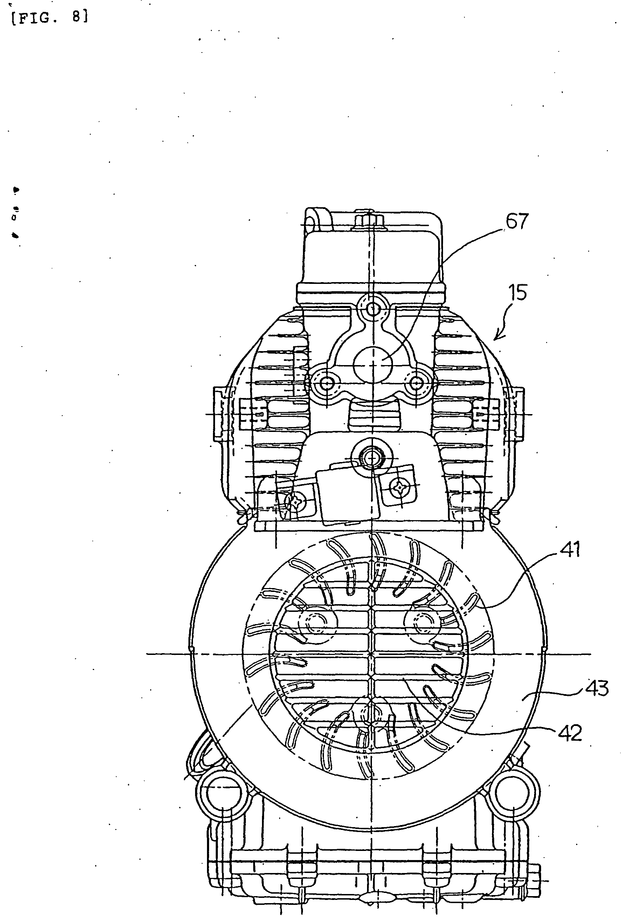

Fig. 6 is a structural illustration of another embodiment of this invention. Fig. 7 and Fig. 8 are a side view and a front view of the engine section corresponding to Fig. 6, respectively.

This embodiment shows a power-assisted bicycle having a structure of rear exhaust layout in which an intake system is provided in front of an engine, and an exhaust system, in the rear thereof.

As shown in Fig. 6, to the front of an engine 15 disposed under main frames 7 is connected an exhaust pipe 86, to which are fitted a carburetor 87 and an air cleaner 88. To the rear of the engine 15 is connected an exhaust pipe 89, to which is fitted a muffler 90. The exhaust pipe 89 and the muffler 90 constituting the exhaust system are covered by a body cover 91 shown in Fig. 6 by a dot and slash line, together with the carburetor 87 and the air cleaner 88 of the intake system.

As a result of the exhaust system being provided in the rear of the engine, the exhaust pipe 89 and the muffler 90 at high temperature are covered by the body cover, thereby preventing accidental contact. In addition, the exhaust system such as an exhaust pipe or a muffler is enclosed in the body cover, so that a spatially effective layout can be achieved with a simple structure, and external appearance is improved as well.

The engine 15, as shown in Fig. 7, is provided, at the front of the cylinder head, with an intake port (intake passage) 67, to which is connected a carburetor, and at the rear of the cylinder head 16, with an exhaust port 18, to which is connected an exhaust pipe 89 (Fig. 6). Also, in front of the cylinder head 16 are disposed intake and exhaust push rods 55, 56, which are adapted to drive intake and exhaust valves 61, 62 through rocker arms 59, 60, respectively. Like the foregoing embodiment, an intake port (intake passage) 67 is provided between these push rods 55, 56.

A piston 49 in the cylinder is connected to a crankshaft 37 through a connecting rod 50, and the crankshaft 37 is disposed longitudinally of the vehicle body. To the crankshaft 37 at the forward end is attached a cooling fan 41, and air is introduced through an air intake 42 provided in an air shroud 43. To the crankshaft 37 at the rear end is mounted a flywheel magnet 45 (rotor) rotatable around a charging coil 46 (stator). To the crankshaft 3 is connected, in the rear of the flywheel magnet, a drive shaft (not shown) through a clutch (not shown) . As a result of the flywheel magnet being disposed at the rear end of the crank shaft 37, the structure of the forward portion of the engine is simplified and a compact layout is achieved, though the flywheel magnet 45 may be disposed near the forward end of the crank shaft 37 in the rear of the fan 41 if no problem arises on the layout.

### Industrial Availability

In this invention as described above, as a result of an OHV engine, with a valve drive system using push rods, being used, the height of the engine itself can be made smaller so as to be advantageous especially to a small bicycle, and as a result of a crank shaft being disposed longitudinally of the vehicle, a compact structure can be effected especially in the lateral direction. Therefore, when an engine or a power assisting mechanism is disposed centrally of the vehicle body, pedals or foot rests can be disposed without protruding significantly in the lateral direction, providing comfortable foot resting and pedaling with an improved drive feeling.

In addition, in an arrangement in which axes of an intake port and an exhaust port in communication with the intake and exhaust valves, respectively, are oriented longitudinally of the vehicle, the intake pipe or the exhaust pipe doesn't protrude from the right and left sides of the vehicle body, providing a compactor structure in the lateral direction.

Further, in an arrangement in which said intake port passes through the space between the intake and exhaust push rods, the intake port is disposed between the intake and exhaust push rods, so that a space within the cylinder head is utilized effectively, providing an even compactor structure in the lateral direction.

Furthermore, in an arrangement in which there provided are a head pipe for holding the steering shaft, and a pair of right and left main frames coupled to this head pipe, valve seats of said intake and exhaust valves are dislocated in the longitudinal direction of the vehicle body, and a head cover enclosing the top ends of said push rods is disposed between the right and left main frames, since the intake and exhaust valves are dislocated longitudinally of the vehicle body, intake and exhaust rocker arms located at the top ends of the push rods are disposed close to each other laterally, so that the head cover of the cylinder head can be formed narrower in the lateral direction. As a result, a body frame extending from the head pipe to the upper middle portion of the vehicle body is composed, for example, of a pair of right and left pipe frames and the head cover can be disposed between the two pipe frames, so that due to size reduction in the lateral direction and effective utilization of the vertical space, the engine and the force combining mechanism can be disposed centrally of the vehicle body at a high position with enough space for foot rests and pedals placed thereunder.

## Claims

1. A small bicycle with an engine comprising a head pipe for holding a steering shaft and a body frame connected to said head pipe, and an engine disposed along the underside of said body frame, said engine having an intake valve and an exhaust valve adapted to be opened and closed through an intake push rod and an exhaust push rod driven by a cam, respectively, said small bicycle characterized in that a crank shaft of said engine is oriented longitudinally of the vehicle, and a single intake and exhaust cam shaft is provided parallel to and upwardly of said crank shaft.

2. The small bicycle with an engine as set forth in claim 1, wherein axes of an intake passage and an exhaust passage in communication with said intake and exhaust valves, respectively, are oriented longitudinally of the vehicle.

3. The small bicycle with an engine as set forth in claim 1 or 2, wherein said intake passage passes through the space between said intake and exhaust push rods.

4. The small bicycle with an engine as set forth in claim 1, 2 or 3, wherein said body frame consists of a pair of right and left main frames, valve seats of said intake and exhaust valves of the engine are dislocated longitudinally of the vehicle body, and a head cover for enclosing the top ends of said push rods is disposed between said right and left main frames.
